# DEMANDE DE BREVET EUROPEEN

(11) **EP 4 332 405 A1**
(43) Date de publication de la demande: **06.03.2024**
(21) Numéro de dépôt: 23193357.3
(22) Date de dépôt: 25.08.2023
(51) Int. Cl.: F16D 55/30, F16D 59/02, H02K 7/102, F16D 121/16, F16D 121/22

(54) **DISPOSITIF DE DÉVERROUILLAGE MANUEL AMOVIBLE POUR UN FREIN ÉLECTROMÉCANIQUE DOUBLE**

(30) Priorité: 29.08.2022 FR 2208643
(71) Demandeur: Moteurs Leroy-Somer, 16915 Angouleme (FR)
(72) Inventeur: GIBAULT, Emmanuel, 16730 LINARS (FR); MILLAC, Stéphane, 16250 COTEAUX DU BLANZACAIS (FR)
(74) Mandataire: Cabinet Nony

(57) **Abrégé**

Ensemble (1) comportant un frein électromécanique (2) et un dispositif de déverrouillage manuel (4) amovible :
- le frein comportant deux armatures (23a ; 23b) mobiles entre une position active où elles s'appliquent contre des disques de frein (21a ; 21b) et une position inactive de libre rotation des disques, les armatures étant amenées en position inactive par des électroaimants (22a ; 22b) comportant une culasse (25a ; 25b) et rappelées en position active par des ressorts (24a ; 24b), les armatures portant des vis (3) étendues à travers les culasses et présentant une tête (31) du côté opposé à l'armature,
- le dispositif de déverrouillage comportant au moins deux bras (41) présentant en extrémité (412) une fourche (42) engagée sur une vis, et un mécanisme à levier (40) induisant un pivotement de la fourche éloignant la tête de la vis (31) de la culasse amenant l'armature en position inactive.

## Description

### Domaine technique

La présente invention concerne les freins électromécaniques doubles pour moteurs électriques.

### Technique antérieure

Dans certaines applications, telles que le levage ou l'entraînement de cabines d'ascenseurs, les moteurs sont équipés de freins électromécaniques à manque de courant tels que décrits dans le brevet FR3046307, qui bloquent le rotor du moteur lorsqu'ils cessent d'être alimentés électriquement.

Un frein électromécanique à manque de courant est généralement composé d'un électroaimant, d'un disque de friction porté par l'arbre du moteur, d'une armature mobile ferromagnétique et de ressorts de poussée. Lorsque l'électroaimant n'est pas alimenté, l'armature, grâce aux ressorts, est poussée sur le disque qui vient ainsi frotter entre deux surfaces statiques, ce qui ralentit le moteur et le bloque. L'arbre du moteur est libéré lorsque l'électroaimant est alimenté.

Les freins électromécaniques à manque de courant sont souvent doubles pour des exigences de sécurité, normatives ou non, comme dans les motorisations d'ascenseurs par exemple.

Il est parfois nécessaire, voire indispensable, en particulier pour des raisons de sécurité, par exemple dans le cas des moteurs d'ascenseurs, que les freins puissent être débrayés manuellement.

Les solutions techniques pour débrayer un frein à manque de courant manuellement consistent à pousser ou tirer sur les armatures afin d'annuler la force de rappel des ressorts. Les systèmes mécaniques utilisés habituellement pour ce faire sont installés en permanence sur les freins.

Deux catégories de système mécanique sont utilisées pour débrayer manuellement des freins doubles à manque de courant.

La première catégorie rassemble les systèmes dans lesquels la première armature et la deuxième armature doivent être déplacées dans le même sens pour déverrouiller le frein. Il s'agit principalement de systèmes de déverrouillage comportant deux sous-systèmes quasi identiques, voire identiques, chaque sous-système agissant sur un frein respectif grâce à un levier de manoeuvre correspondant, nécessitant l'emploi des deux mains simultanément pour déverrouiller l'ensemble.

La seconde catégorie rassemble les systèmes dans lesquels la première armature et la deuxième armature du frein double doivent être déplacées dans des sens opposés. Il s'agit principalement de systèmes comportant deux sous-systèmes quasi identiques, voire identiques, chaque sous-système agissant sur un frein respectif, ou de systèmes avec un seul levier, le mécanisme de déverrouillage étant tel que l'appui sur la première armature pour débrayer le premier frein sert de point de réaction pour engendrer la force sur la deuxième armature et débrayer le deuxième frein.

Cependant, il existe des cas, celui des freins de moteurs d'ascenseurs par exemple, où une ou plusieurs des contraintes suivantes s'imposent au système de débrayage manuel :
- le système de débrayage manuel ne doit pas rester en permanence sur la machine,
- il doit pourvoir être actionné avec une seule main,
- lorsque qu'il cesse d'être actionné, le frein doit retrouver automatiquement sa fonction de sécurité,
- le levier d'actionnement doit être le plus aligné possible par rapport à la verticale et en aucun cas dépasser des bords latéraux de la machine, et
- le frein doit pouvoir être opérationnel avec des armatures se déplaçant dans le même sens ou en sens opposés.

### Exposé de l'invention

L'invention vise à perfectionner encore les dispositifs de déverrouillage manuel et à proposer un dispositif compatible avec les contraintes listées ci-dessus.

L'invention répond à cet objectif grâce à un ensemble comportant un frein électromécanique double et un dispositif de déverrouillage manuel du frein, amovible :
- le frein électromécanique double comportant deux armatures mobiles axialement entre une position active dans laquelle elles s'appliquent contre des disques de frein respectifs et une position inactive permettant une libre rotation des disques de frein, les armatures étant amenées en position inactive sous l'action d'électroaimants respectifs comportant chacun une culasse et rappelées dans leur position active par un ou plusieurs ressorts de poussée, les armatures portant des vis de traction respectives s'étendant à travers les culasses respectives et présentant une tête s'étendant du côté de la culasse opposé à l'armature,
- le dispositif de déverrouillage manuel comportant au moins deux bras présentant chacun en extrémité une fourche apte à s'engager sur une vis de traction respective, et un mécanisme à levier permettant lorsqu'actionné d'induire un pivotement de la fourche conduisant à éloigner la tête de la vis de la culasse pour amener l'armature en position inactive.

Le frein électromécanique double est par exemple utilisé dans des applications telles que le levage ou l'entraînement de cabines d'ascenseurs.

Le dispositif de déverrouillage manuel du frein est amovible, il peut être séparé du frein électromécanique double et/ou réinstallé sur ce dernier, rapidement et facilement.

Le dispositif de déverrouillage manuel du frein est sécuritaire, dès que l'action sur le mécanisme à levier cesse, le frein électromécanique double peut reprendre sa fonction, même si le dispositif de déverrouillage est encore installé sur le frein électromécanique double.

### Dispositif de déverrouillage manuel

Chaque bras peut présenter une section transversale aplatie selon un plan d'aplatissement et la fourche peut s'étendre selon un plan perpendiculaire audit plan d'aplatissement. La section aplatie confère au bras une flexibilité dans le sens d'un rapprochement ou d'un éloignement des bras destinés au déblocage d'une même armature, ce qui permet au dispositif d'être utilisé avec des freins de tailles différentes.

Le dispositif de déverrouillage manuel peut comporter quatre bras présentant chacun en extrémité une fourche apte à s'engager sur une vis de traction respective, ces bras étant notamment reliés par paires à une extrémité opposée à celle portant la fourche.

Le mécanisme à levier comporte de préférence un unique levier à actionner manuellement. Ce levier peut être relié par une première articulation à une première paire de bras et il peut être relié par une deuxième articulation à une biellette. Cette dernière peut être reliée par une troisième articulation à une deuxième paire de bras, de telle sorte qu'une rotation du levier dans un sens donné amène les paires de bras à s'écarter, et ainsi à agir sur le frein.

Un tel mécanisme permet de démultiplier la force de manoeuvre du levier, ce qui permet d'utiliser le dispositif de déverrouillage manuel d'une seule main.

Les bras de la première paire peuvent être reliés ensemble au niveau de la première articulation. Les bras de la deuxième paire peuvent être reliés au niveau de la troisième articulation.

Chacune des première et troisième articulations peut comporter un axe qui traverse les bras correspondants et qui les maintient chacun en appui sur le levier et la biellette, respectivement, de préférence avec un jeu minimum sans serrage.

Le levier peut être orienté vers le frein au début de son actionnement, notamment avec une orientation assez proche de la verticale, l'actionnement du levier s'effectuant de préférence par un mouvement l'éloignant du frein.

La deuxième articulation est de préférence équidistante des première et troisième articulations.

Le levier et la biellette peuvent présenter chacun une section transversale aplatie, par exemple être de même section que les bras.

Les bras peuvent présenter au niveau des première et troisième articulations une portion d'extrémité coudée. L'axe d'articulation traverse des perçages réalisés dans ces portions d'extrémité, qui sont planes. La présence du coude permet d'avoir un axe d'articulation orienté sensiblement horizontalement et perpendiculaire aux portions d'extrémité. Le levier peut présenter une extrémité coudée, de préférence à 90°, adjacente à la première articulation, pour limiter la course en rotation du levier par rapport aux bras. L'extrémité coudée du levier permet d'interdire l'utilisation du système si le levier et la biellette sont placés au-dessus des triangles formés par les couples de bras reliés. Si le levier et la biellette étaient placés au-dessus des triangles formés par les couples de bras reliés, il serait facile par flexion du levier d'atteindre l'alignement des articulations et de perdre ainsi la fonction de retour automatique à la manière d'une genouillère.

Chaque bras peut être de longueur comprise entre 30 cm et 70 cm, notamment entre 45 cm et 50cm, par exemple égale à 47 cm environ.

### Frein électromécanique double

Le frein électromécanique double est bidirectionnel.

Par « frein électromécanique bidirectionnel », on désigne un frein qui agit dans les deux sens de rotation quand il est associé à une machine tournante.

Le frein électromécanique double comporte deux électro-aimants associés à deux armatures, les déplacements des armatures pouvant se faire dans le même sens ou dans des sens opposés.

Chaque armature peut porter deux vis de traction s'étendant à travers les culasses respectives et présentant une tête s'étendant du côté de la culasse opposé à l'armature, notamment lorsque le dispositif de déverrouillage manuel comporte quatre bras présentant chacun en extrémité une fourche. Ces vis de traction peuvent être diamétralement opposées.

### Machine électrique tournante

L'invention a encore pour objet une machine électrique tournante comportant un moteur électrique et un ensemble selon l'invention, tel que défini ci-dessus.

Le moteur électrique peut comporter un rotor ayant un arbre. Au moins un disque de frein peut être porté par l'arbre du rotor, tournant avec celui-ci.

Le dispositif de déverrouillage manuel de la machine électrique tournante peut être réversible, c'est-à dire qu'il peut être installé de façon à être utilisé depuis l'arrière de la machine électrique tournante, i.e. du côté du frein électromécanique, ou depuis l'avant de la machine électrique tournante, i.e. du côté du moteur électrique.

Le dispositif de déverrouillage manuel peut également être installé dans l'une des deux directions verticales, c'est-à-dire avec les bras orientés vers le haut ou avec les bras orientés vers le bas.

### Procédé

L'invention a encore pour objet un procédé de déverrouillage manuel d'un frein électromécanique à l'aide d'un ensemble selon l'invention, comportant les étapes consistant à :
(a) engager les fourches sur les vis de traction respectives,
(b) actionner manuellement le mécanisme à levier, cela amenant, par l'intermédiaire des fourches et des vis de traction, chaque armature en position inactive.

### Brève description des dessins

L'invention pourra être mieux comprise à la lecture de la description détaillée qui va suivre, d'un exemple de mise en oeuvre non limitatif de celle-ci, et à l'examen du dessin annexé, sur lequel
[Fig 1] la figure 1 est une vue en perspective, schématique et partielle, d'un frein électromécanique double selon l'invention,
[Fig 2] la figure 2 est une coupe transversale partielle du frein électromécanique de la figure 1,
[Fig 3] la figure 3 est une vue en perspective, schématique et partielle, d'un ensemble formé du frein électromécanique de la figure 1 et d'un dispositif de déverrouillage manuel, selon l'invention,
[Fig 4] la figure 4 représente isolément en perspective le dispositif de déverrouillage manuel de la figure 3,
[Fig 5] la figure 5 est une coupe transversale, schématique et partielle, passant verticalement par les vis de traction, du frein électromécanique de la figure 1 lorsque le mécanisme à levier n'est pas actionné,
[Fig 6] la figure 6 est une coupe transversale, schématique et partielle, passant par les vis de traction, du frein électromécanique de la figure 1 lorsque le mécanisme à levier est actionné, et
[Fig 7] la figure 7 représente de manière schématique et partielle l'engagement d'une fourche sur une vis de traction.

### Description détaillée

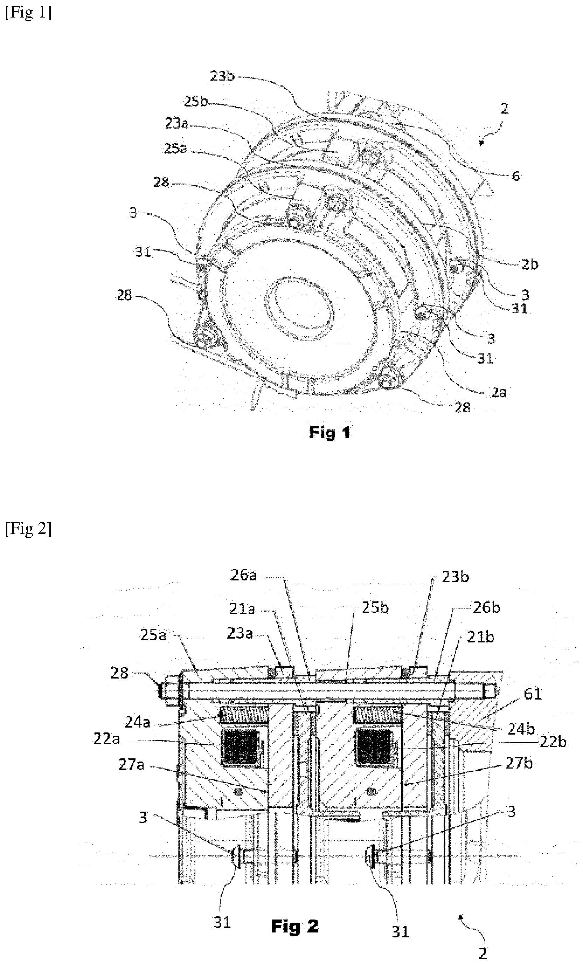

On a représenté aux figures 1 et 2 un frein électromécanique 2 double comportant deux disques de frein avant 21b et arrière 21a, tournant avec l'arbre du moteur, et deux armatures avant 23b et arrière 23a.

Le frein 2 comporte également un électroaimant avant 22b comportant une culasse avant 25b, et un électroaimant arrière 22a comportant une culasse arrière 25a, ainsi que des ressorts de poussée avant 24b et arrière 24a.

Le frein 2 est fixé sur une partie fixe 6, à savoir le palier d'un moteur électrique, présentant une surface de friction, par l'intermédiaire de goujons 28.

Les disques de frein 21a et 21b sont accouplés au palier 6, directement ou via une pièce intermédiaire de type moyeu Les armatures 23a et 23b sont mobiles axialement par rapport aux autres éléments du frein 2.

Lorsque les électroaimants 22a et 22b ne sont pas alimentés, des entrefers avant 27b et arrière 27a sont présents entre les culasses 25b et 25a, respectivement, et les armatures 23b et 23a, respectivement, et les armatures 23a et 23b sont poussées par les ressorts 24a et 24b, respectivement, sur les disques 21a et 21b. Les disques 21a et 21b viennent alors frotter entre les armatures 23a et 23b et des surfaces de friction statiques, définies respectivement par la culasse 25b et le palier 61 du moteur 6 dans l'exemple illustré, ce qui ralentit et/ou bloque la rotation de l'arbre du moteur dans les deux sens.

Lorsqu'ils sont alimentés, les électroaimants 22a et 22b attirent les armatures 23a et 23b contre l'action des ressorts de poussée, respectivement, ce qui libère les disques 21a et 21b et ainsi l'arbre du moteur 6.

Le frein 2 peut comporter des entretoises avant 26b et arrière 26a qui permettent notamment de régler les entrefers 27b et 27a, respectivement, et peuvent servir de liaison glissière pour le coulissement axial des armatures 23b et 23a, respectivement.

Comme visible sur les figures 1 à 3, les armatures 22a et 22b portent chacune deux vis de traction 3 diamétralement opposées, s'étendant à travers les culasses 25a et 25b respectives, et présentant une tête 31 s'étendant du côté de la culasse opposé à l'armature.

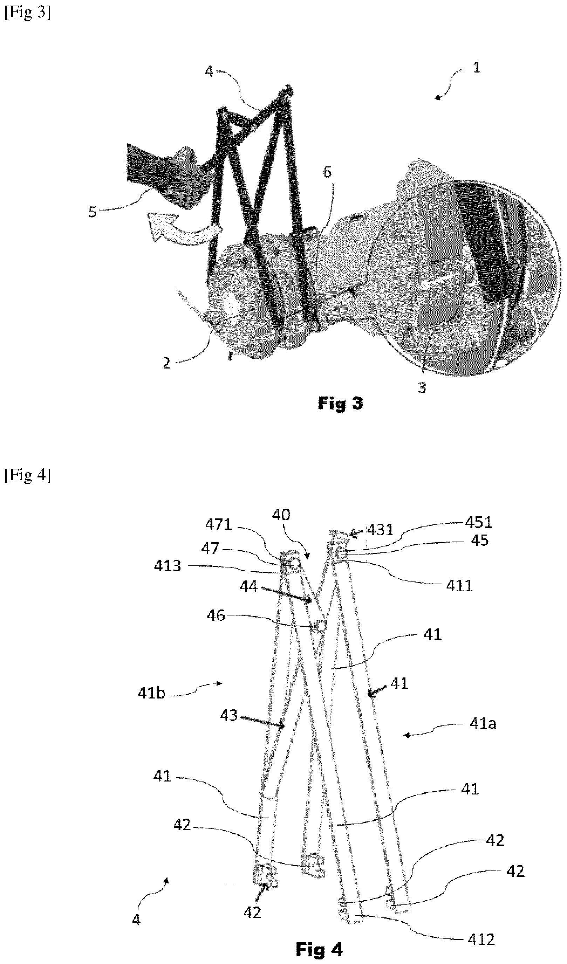

On a représenté à la figure 3 un ensemble formé du frein électromécanique 2 et d'un dispositif de déverrouillage manuel 4 du frein 2, qui peut être actionné par une seule main 5.

Comme visible sur la figure 4, le dispositif de déverrouillage manuel 4 comporte quatre bras 41 portant chacun à une extrémité 412 une fourche 42, et un mécanisme à levier 40 comportant un levier 43 et une biellette 44.

Les bras 41 présentent chacun une section transversale aplatie selon un plan d'aplatissement et les fourches 42 s'étendent chacune respectivement dans un plan perpendiculaire à ce plan d'aplatissement, vers l'intérieure du dispositif 4. Les fourches 42 sont par exemple constituées par des pièces rapportées sur les bras 41 et soudées sur ceux-ci.

Le levier 43 et la biellette 44 présentent chacun une section transversale aplatie selon des plans d'aplatissement sensiblement parallèles.

Les bras 41 sont reliés par paire au niveau de leur extrémité 411 opposée à l'extrémité 412 portant la fourche 42.

Le levier 43 est relié à une première paire de bras 41a par une première articulation 45 au niveau de l'extrémité 411 des bras 41. Il est relié à la biellette 44 par une deuxième articulation 46.

La biellette 44 est reliée à la deuxième paire de bras 41b par une troisième articulation 47 au niveau de l'extrémité 411 des bras.

La deuxième articulation 46 est équidistante de la première articulation 45 et de la troisième articulation 47, la distance entre les articulations 45 et 46 étant par exemple comprise entre 5 cm et 15 cm, notamment entre 9 cm et 10 cm.

La première articulation 45 et la troisième articulation 47 comportent chacune un axe d'articulation, 451 et 471 respectivement, qui traverse les bras 41 correspondants et qui les maintient chacun en appui sur le levier 43 et la biellette 44, respectivement.

Les bras 41 présentent un coude 413 à environ 165° au niveau des extrémités 411 et les axes d'articulation 451 et 471 traversent des perçages réalisés dans les portions d'extrémité 411, qui sont planes. La présence du coude 413 permet d'avoir des axes d'articulation 451 et 471 orientés sensiblement horizontalement et perpendiculaires aux portions d'extrémité 411, à la biellette 44 et au levier 43.

Le levier 43 présente une extrémité 431 coudée à environ 90°, adjacente à la première articulation 45, ce qui permet de limiter la course en rotation du levier 43 par rapport aux bras 41. L'extrémité coudée 431 du levier permet d'interdire l'utilisation du système si le levier 43 et la biellette 44 sont placés au-dessus des triangles formés par les couples de bras reliés. Si le levier et la biellette étaient placés au-dessus des triangles formés par les couples de bras reliés, il serait facile par flexion du levier d'atteindre l'alignement des articulations et de perdre ainsi la fonction de retour automatique à la manière d'une genouillère.

Le dispositif de déverrouillage 4 est réversible, c'est-à-dire qu'il peut être installé de façon à être utilisé de l'arrière de la machine formée de l'ensemble 1 et du moteur 6, coté frein 2, comme illustré sur la figure 3, ou de l'avant, coté moteur 6.

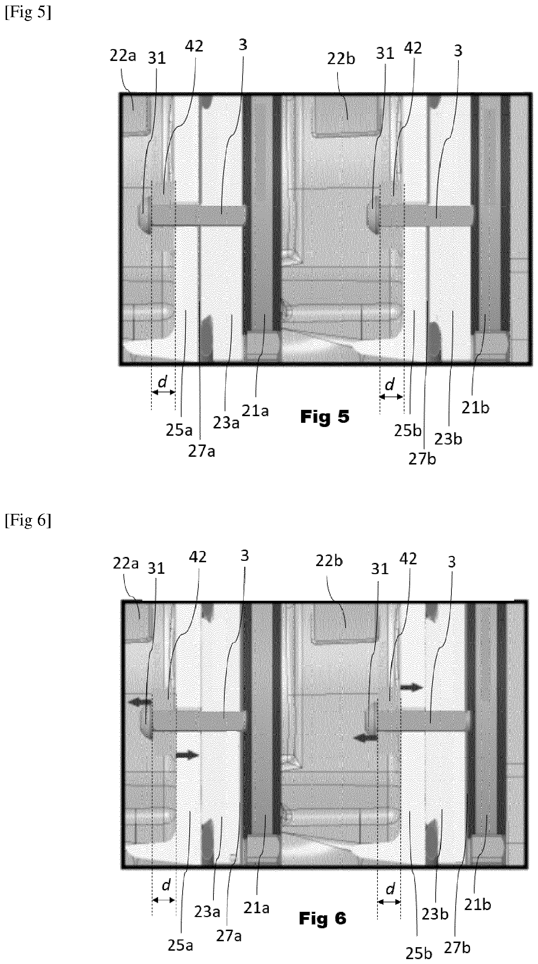

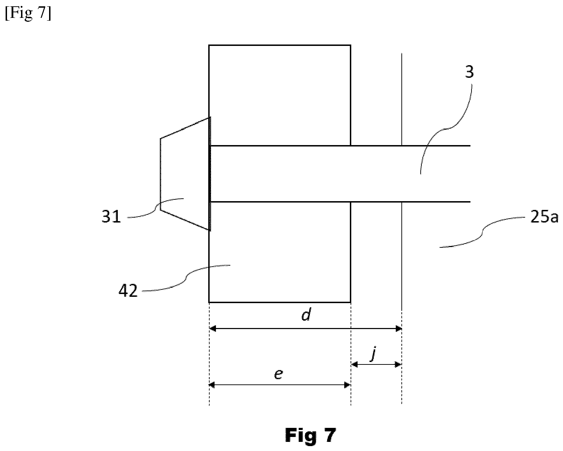

La distance *d* entre la tête des vis 31 et les culasse 25a et 25b respectives est réglée en usine. Cette distance *d* permet l'introduction des fourches 42 sous les têtes de vis, comme illustré sur les figures 5 à 7. La distance d est strictement positive et correspond à la somme de l'épaisseur e d'une fourche et d'un jeu j, le jeu *j* étant par exemple compris entre 0.26mm et 0.74mm.

Le levier 43 est orienté vers le frein 2 au début de son actionnement, avec une orientation assez proche de la verticale, l'actionnement du levier 43 pour déverrouiller le frein s'effectuant alors par un mouvement l'éloignant du frein 2.

L'action sur le levier 43, écarte les deux paires de bras 41a et 41b. On observe, sur la figure 6, que les fourches 42 s'inclinent lors de l'actionnement du levier 43, une dent de chaque fourche 42 prenant alors appui sur la culasse respective et l'autre dent prenant appui sur la tête 31 de la vis 3 pour déplacer cette dernière. En pivotant, la fourche 42 écarte ainsi la tête de vis 31 de la culasse respective, déplaçant l'armature associée, ce qui libère le disque de frein correspondant. Le frein électromécanique 2 est alors déverrouillé.

Bien entendu, l'invention n'est pas limitée aux exemples qui viennent d'être décrits. Par exemple, le frein électromécanique 2 peut être à déplacement d'armatures opposé, les vis de traction 3 portées par l'armature 22a étant alors orientées à l'opposé des vis de traction 3 portées par l'armature 22b.

## Revendications

1. Ensemble (1) comportant un frein électromécanique double (2) et un dispositif de déverrouillage manuel (4) du frein (2), amovible :
- le frein électromécanique double (2) comportant deux armatures (23a ; 23b) mobiles axialement entre une position active dans laquelle elles s'appliquent contre des disques de frein (21a ; 21b) respectifs et une position inactive permettant une libre rotation des disques de frein (21a ; 21b), les armatures (23a ; 23b) étant amenées en position inactive sous l'action d'électroaimants ( 22a ; 22b) respectifs comportant chacun une culasse (25a ; 25b) et rappelées dans leur position active par un ou plusieurs ressorts de poussée (24a ; 24b), les armatures (23a ; 23b) portant des vis de traction (3) respectives s'étendant à travers les culasses (25a ; 25b) respectives et présentant une tête (31) s'étendant du côté de la culasse (25a ; 25b) opposé à l'armature (23a ; 23b),
- le dispositif de déverrouillage manuel (4) comportant au moins deux bras (41) présentant chacun en extrémité (412) une fourche (42) apte à s'engager sur une vis de traction (3) respective, et un mécanisme à levier (40) permettant lorsqu'actionné d'induire un pivotement de la fourche (42) conduisant à éloigner la tête de la vis (31) de la culasse (25a ; 25b) pour amener l'armature (23a ; 23b) en position inactive.

2. Ensemble selon la revendication 1, chaque bras (41) présentant une section transversale aplatie selon un plan d'aplatissement et la fourche (42) s'étendant selon un plan perpendiculaire audit plan d'aplatissement.

3. Ensemble selon l'une des revendications 1 et 2, le dispositif de déverrouillage manuel (4) comportant quatre bras (41) présentant chacun en extrémité (412) une fourche (42) apte à s'engager sur une vis de traction (3) respective, ces bras (41) étant reliés par paire à une extrémité (411) opposée à celle portant la fourche (42).

4. Ensemble selon la revendication 3, le mécanisme à levier (40) comportant un unique levier (43) à actionner manuellement, ce levier (43) étant relié par une première articulation (45) à une première paire de bras (41a) et par une deuxième articulation (46) à une biellette (44) elle-même reliée par une troisième articulation (47) à une deuxième paire de bras (41b), de telle sorte qu'une rotation du levier (43) dans un sens donné amène les paires de bras (41a ; 41b) à s'écarter.

5. Ensemble selon la revendication 4, les bras (41) de la première paire (41a) étant reliés ensemble au niveau de la première articulation (45), et ceux de la deuxième paire (41b) au niveau de la troisième articulation (47).

6. Ensemble selon la revendication 5, chacune des première et troisième articulations (45 ; 47) comportant un axe qui traverse les bras (41) correspondants et qui les maintient chacun en appui sur le levier (43) et la biellette (44), respectivement, de préférence avec un jeu minimum sans serrage.

7. Ensemble selon l'une quelconque des revendications 4 à 6, le levier (43) étant orienté vers le frein (2) au début de son actionnement, qui s'effectue par un mouvement l'éloignant du frein (2).

8. Ensemble selon l'une quelconque des revendications 4 à 7, la deuxième articulation (46) étant équidistante des première et troisième articulations (45 ; 47).

9. Ensemble selon l'une quelconque des revendication 4 à 8, le levier (43) et la biellette (44) présentant chacun une section transversale aplatie.

10. Ensemble selon l'une quelconque des revendications 4 à 9, les bras (41) présentant au niveau des première et troisième articulations (45 ; 47) une portion d'extrémité (411) coudée.

11. Ensemble selon l'une quelconque des revendication 4 à 10, le levier (43) présentant une extrémité coudée (431), de préférence à 90°, adjacente à la première articulation (45), pour limiter la course en rotation du levier (43) par rapport aux bras (41).

12. Procédé de déverrouillage manuel d'un frein électromécanique (2) à l'aide d'un ensemble (1) selon l'une quelconque des revendications 1 à 10, comportant les étapes consistant à :
(a) engager les fourches (42) sur les vis de traction (3) respectives,
(b) actionner manuellement le mécanisme à levier (40), cela amenant, par l'intermédiaire des fourches (42) et des vis de traction (3), chaque armature (23a ; 23b) en position inactive.
